(19) Europäisches Patentamt / European Patent Office / Office européen des brevets

(11) **EP 3 312 555 B1**

(12) **EUROPEAN PATENT SPECIFICATION**

(45) Date of publication and mention
of the grant of the patent:
**01.05.2019 Bulletin 2019/18**

(51) Int Cl.:
***G01B 11/26*** *(2006.01)*      ***G01B 11/16*** *(2006.01)*

(21) Application number: **17001732.1**

(22) Date of filing: **20.10.2017**

(54) **METHOD FOR MONITORING VARIABLE LOAD OF A ROOF STRUCTURE**

VERFAHREN ZUR ÜBERWACHUNG EINER VARIABLEN LAST EINER DACHKONSTRUKTION

PROCÉDÉ DE SURVEILLANCE DE LA CHARGE VARIABLE D'UNE STRUCTURE DE TOIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2016 PL 41921816**

(43) Date of publication of application:
**25.04.2018 Bulletin 2018/17**

(73) Proprietor: **WiSeNe Sp. z o.o.
02-829 Warszawa (PL)**

(72) Inventors:
• **Pioro, Zbigniew
02-777 Warszawa (PL)**
• **Antoszkiewicz, Edward
01-609 Warszawa (PL)**
• **Osiniak, Marcin
02-778 Warszawa (PL)**
• **Wierzbicki, Stanislaw
02-849 Warszawa (PL)**

(74) Representative: **Orlinska, Dorota Irena
Sobajda & Orlinska
Kancelaria Patentowa sp. j.
Ul. Dworkowa 2/67
00-784 Warszawa (PL)**

(56) References cited:
FI-B- 118 701          FR-A1- 2 930 666
US-A1- 2007 164 874    US-A1- 2012 166 136

• HENKE KLAUDIUS ET AL: "Use of digital image processing in the monitoring of deformations in building structures", JOURNAL OF CIVIL STRUCTURAL HEALTH MONITORING, SPRINGER BERLIN HEIDELBERG, BERLIN/HEIDELBERG, vol. 5, no. 2, 20 September 2014 (2014-09-20), pages 141-152, XP035472333, ISSN: 2190-5452, DOI: 10.1007/S13349-014-0091-6 [retrieved on 2014-09-20]

**Description**

The subject of this invention is a method for monitoring variable load of a roof structure, for example the load caused by the lingering snow cover. The method can be used in systems for monitoring the load carrying capacity exhaustion (a threat level for safe use) of roof structures of building objects, especially large-area objects.

Monitoring of structures of building objects, in particular roof structure elements, serves to improve the safety of their use. The basic group of methods used for this purpose includes methods for monitoring changes in the location of structural components of a buildings using optical devices.

The specification of the Polish patent application No. P.381578 presents a method based on directing the light ray below the beams of the roof structure. By excessive bending of at least one beam with a special ray stop attached, the light ray is interrupted and then the audible and visual alarms are activated.

The Polish patent No. PL183116 discloses a method for measuring the twisting and deflection of a beam in static and dynamic systems, wherein at least one mirror is attached to the test element to which a laser beam is directed, which, upon reflection, is read on the screen.

The applicant of this solution has developed the technology disclosed in the Polish patent application No. P.393402 (see also US 2012/0166136) concerning the method of monitoring the vertical displacement component and vertical deflection component of structure elements of buildings, wherein the technology uses measurements made by laser rangefinders. The distance measurements are taken in relation to fixed elements, such as the floor.

The patent specification No. FI118701B discloses a method for monitoring the load of the roof structure using inclinometers, i.e. instruments measuring the inclination angle of the line (defined by the position of the inclinometer's sensitivity axis) from the plane perpendicular to the gravity force, in which they are placed on the structure elements of buildings freely, e.g. on one side of the roof or the building. The limitation of such a system is the possibility of large measurement errors occurring in case of unsymmetrical load on the roof structure.

Known methods for monitoring deflection of structure elements using laser rangefinders may encounter difficulties when the ambient temperature is too low or too high, or when the ground is uneven and soiled, or when the monitored objects are characterised by high dustiness, which occurs, e.g., in the wood industry.

The object of the present invention is to develop a method for monitoring the load of the building's roof structure, the task of which is to reliably determine the threat level for safe use caused by transient external factors, e.g. atmospheric ones. At the same time, the method should be insensitive to asymmetry of the roof structure load and the harsh environmental conditions, such as very low temperatures (<0°C), frost, very high temperatures (> 50°C), high humidity, high dustiness and contamination of the ground (e.g. snow or mud in open canopies), etc.

The subject of the present invention is a method for monitoring variable load of a roof structure, particularly snow load, comprising measuring the deflection of selected elements and/or structural systems by inclinometers, characterised in that for at least one selected element or structural system, preferably representative of the load carrying capacity exhaustion of the roof structure under variable load, at its two points, the first one and the second one, the rotation angles $\alpha_1$ and $\alpha_2$ of its cross-sections caused by the variable load are measured with two inclinometers, the first one and the second one, which are fastened to said element/structural system at the mentioned two points, symmetrically with respect to its transverse symmetry axis, then the sum $\alpha_{madd}$ of the absolute values of rotation angles $\alpha_2$ and $\alpha_1$ is calculated according to the formula $\alpha_{madd} = |\alpha_2| + |\alpha_1|$, representing the mean value of the variable load of the said element or structural system and indicating the load carrying capacity exhaustion. The exact wording of the method according to the invention is defined in independent claim 1.

Preferably, inclinometer measurements are performed periodically and/or synchronously.

The results of the measurements performed with the method according to the invention are base values for further calculations, in which the recorded values are processed to determine the threat level for safe use of the structure. Examples of ways to use the data obtained with method according the invention are presented below.

The load carrying capacity exhaustion of each of the selected elements and structural systems can be described by the load carrying capacity exhaustion coefficient *lccec* of the element or structural system, which is assumed to be equal to the relative value of the average load *rval* of that element/structural system, which is determined by dividing the value of $\alpha_{madd}$ calculated for that element/structural system by its permissible value $(\alpha_{madd})_{perm}$, wherein *lccec* = *rval* = 0 means no variable load, while *lccec* = *rval* = 1 means reaching the permissible variable load of said element / structural system.

Monitoring the load of the roof structure that determines the threat level for its safe use, utilising the results of the measurements made with the method according to the invention, can be carried out in such way that the highest of the calculated load carrying capacity exhaustion coefficients *lccec* of all chosen elements and structural systems is taken as the current value of the overload probability of the roof structure *oprs,* which is an analogue value, continuous in the range ⟨0;1⟩, , and then a signal having the so determined current value of overload probability of the roof structure *oprs* is emitted.

Monitoring the roof structure load that determines threat level for its safe use, utilising the results of the measurements made with the method according to the invention, can also be carried out in such way that the highest of the calculated load carrying capacity exhaustion coefficients *Iccec* for all selected elements and structural systems is taken as the current value of the overload probability of the roof structure *oprs,* and then the value *oprs* determined in such way is compared to the, assumed for it, *n* threshold values with the following relation between them: first threshold value < second threshold value < third threshold value <....... < n-th threshold value, defining a threat level for safe use *tlfsu* of the structure, which is a discrete value, taking values from a set of natural numbers within a range equal to n number of assumed threshold values, e.g. {0, ..., 4}, as equal to the number of the highest threshold value from those whose values are lower than *oprs* (first threat level for safe use when the first threshold is lower than *oprs;* second one when the first and second threshold values are lower than *oprs;* third one when the first, second and third threshold values are lower than *oprs;* ...; n-th one when the first, second, third, ... and n-th threshold values are lower than *oprs*), and then a signal containing information about such evaluated current value of a threat level for safe use *tlfsu* of roof structure is emitted.

Monitoring the roof structure load that determines the threat level for its safe use, utilising the results of the measurements made with the method according to the invention, can also be carried out such that the determined load carrying capacity exhaustion coefficient *Iccec* of each of the selected elements and structural systems is compared to, assumed for this element or system, *n* threshold values of the load carrying capacity exhaustion coefficient with the following relation between them: first threshold value < second threshold value < third threshold value <....... < n-th threshold value, where it is preferable when exceeding the threshold value of the same number for each of the selected elements and structural systems means achieving the same load carrying capacity exhaustion coefficient, determining the load carrying capacity exhaustion level *Iccel* for a given element/system, which is a discrete value, taking values from a set of natural numbers within a range equal to n number of assumed threshold values, e.g. {0, ..., 4}, as equal to the number of the highest threshold value from those whose values are lower than *Iccec* (the first level of load carrying capacity exhaustion when only the first threshold value is lower than *Iccec,* the second one when the first and second threshold values are lower than *Iccec,* and the third one when the first, second and third threshold values are lower than *Iccec;* and the n-th one when the first, second and third, ....and n-th threshold values are lower than *Iccec*), then the highest of the specified load carrying capacity exhaustion levels *Iccel* of all selected elements and structural systems is assumed to be the current threat level for safe use *tlfsu* of the roof structure, and then a signal having the so determined current threat level for safe use *tlfsu* of the roof structure is emitted.

Monitoring the roof structure load that determines the threat level for its safe use, utilising the results of the measurements made with the method according to the invention, can also be carried out in such a way that the value $\alpha_{madd}$, determined for each of the selected elements and structural systems, is compared to the, assumed for that element or structural system, *n* threshold values with the following relation between them: first threshold value < second threshold value < third threshold value <....... < n-th threshold value, wherein it is preferable when exceeding the threshold value of the same number for each of the selected elements/structural systems means achieving the same load carrying capacity exhaustion coefficient *Iccec,* determining the load carrying capacity exhaustion level *Iccel* of the said element/structural system as equal to the number of the highest threshold value from those whose values are lower than $\alpha_{madd}$ (first load carrying capacity exhaustion level when only the first threshold value is lower than $\alpha_{madd}$; second one when the first and second threshold values are lower than $\alpha_{madd}$, third one when the first, second and the third threshold values are lower than $\alpha_{madd}$; ...; n-th one when the first, second, third, ... and n-th threshold values are lower than $\alpha_{madd}$), and then the highest of such specified load carrying capacity exhaustion levels *Iccel* of all selected elements and structural systems is taken as the current threat level for safe use *tlfsu* of the roof structure, and then a signal having the so determined current threat level for safe use *tlfsu* is emitted.

In order to measure the change in the load carrying capacity exhaustion of the structure caused by variable load, it is possible to measure the deflection of its elements under this load. As the deflection of the structural element changes, its cross-sections rotate. Angle of such rotation of cross-sections of the structural element, measured in a suitably chosen location, is proportional to the change of deflection of the element. In order to determine the load carrying capacity exhaustion of the structure, the rotation angle of the cross-section of this element caused by its deflection can be measured at a suitably chosen location. The rotation angle in question can be measured by an inclinometer attached to the structural element, wherein the attachment should be rigid, allowing for a precise recording of the change in the state of the structural element.

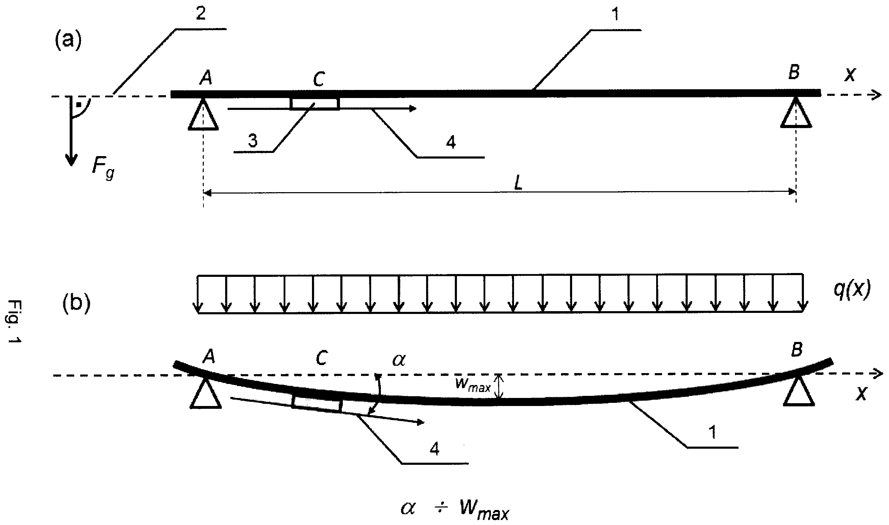

The general, known principle of measuring the deflection of a structural element by measuring the rotation angle of its cross-section is illustrated in a simplified way in Fig. 1, on the example of a beam 1 freely supported at points *A* and *B.* The unloaded beam 1 shown in the upper part of the drawing (part "a" of the drawing) is straight, and its longitudinal axis 2 lies in a horizontal plane - in this case it is perpendicular to the gravity force $F_g$. An inclinometer 3 is attached to the beam at point *C* in such way that its sensitivity axis 4 is in this case parallel to the longitudinal axis of the beam 2 (perpendicular to the gravity force). The inclinometer, always measuring the angle between its own sensitivity axis and a plane perpendicular to the gravity force, will indicate zero in this state. The state of the beam, which is loaded along the whole length with a uniformly distributed load *q(x),* is shown in the lower part of the drawing (part "b" of the drawing). Under this load, the beam is deflected and the maximum deflection, shown in the drawing, is equal to $w_{max}$. The deflection results in a non-zero angle $\alpha$ between the initial position of the beam axis and the inclinometer's sensitivity axis. The inclinometer will indicate this value in this case. The value of this angle is directly proportional to the maximum deflection $w_{max}$, so it can be a measure of deflection, and therefore can be a measure of the load carrying capacity exhaustion of the beam. For the freely supported beam, the relation between the maximum deflection $w_{max}$ and the maximum value of rotation angle $\alpha_{max}$ (occurring at the points of the beam support) is the following:

$$\alpha_{max} = \pm 3.2 \frac{w_{max}}{L}, \qquad (1),$$

where $L$ is the distance between points $A$ and $B$ of the beam support.

Determining the load carrying capacity exhaustion of structural element by measuring the rotation angle of one cross-section may be subject to unacceptably high error in case of load asymmetry, which often occurs. The solution to this problem is the use of differential measurement, i.e. measuring the rotation angle of the cross-section at two different points, located symmetrically with respect to the transverse symmetry axis of the element or structural system (oppositely, on both sides of the symmetry axis).

The structural elements selected for the measurements should be representative of the behavior of the building structure, which means that they play an important role in the structure, e.g. they are the main support elements, rather than the components that perform secondary functions. It is preferable that for of the purposes of the invention, the selection of such important structural elements is consulted with the designer of the structure under consideration or with another qualified person.

The method of the invention is explained with the use of an example in the drawings, in which Fig. 1 illustrates a known method of measuring the deflection of structural elements by measuring the rotation angle of the cross-section with an inclinometer mounted on the said element. Fig. 2 shows the method according to the invention, i.e. the load diagram of the frame structural system and the rotation angle measurement scheme, wherein $Incl\_1$ and $Incl\_2$ are the inclinometers measuring the rotation angles $\alpha_1$ and $\alpha_2$, respectively, of the cross-sections of the frame at their attachment points, which are symmetric with respect to the symmetry axis of the frame, and Fig. 3 shows the rotation of the whole frame and the resulting components of the measured rotation angles of cross-sections of the structural system.

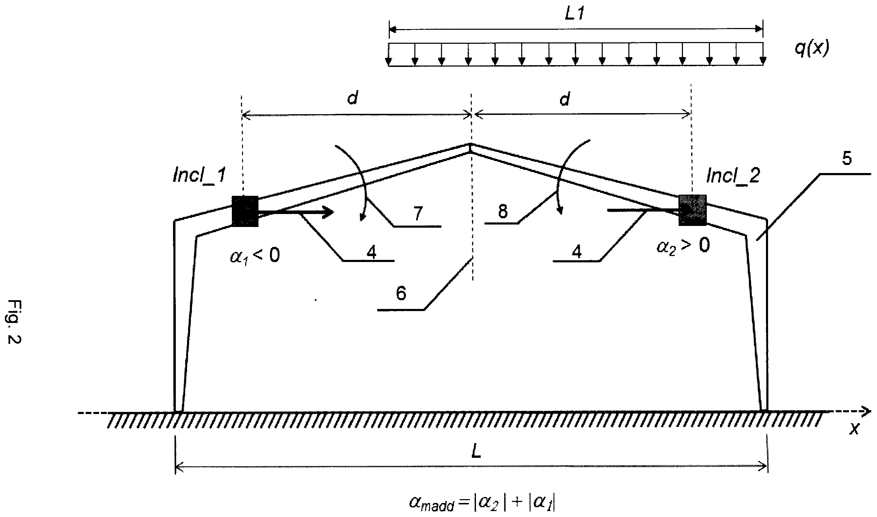

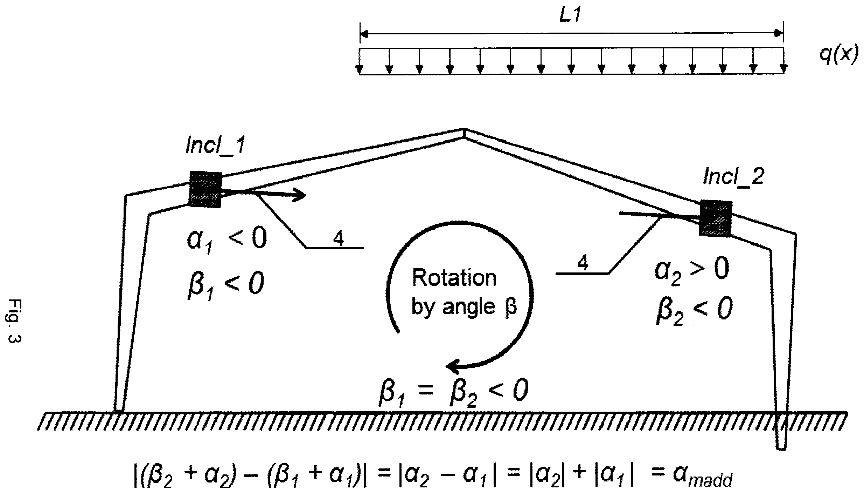

An exemplary structural system in the form of a frame, which may be the main load-carrying structure of halls with symmetrical double-pitched roof is shown schematically on Fig. 2 and 3. The arrangement of several such structures located side by side forms the main load-carrying structure of the building. Bearing systems of halls may also have other shapes, such as a truss based on columns, arc or part of arc mounted on vertical pillars or directly based on foundations. It will be obvious to the person skilled in the art that practically there may be various types of bearing systems that can be monitored using the method according to the invention.

The inclinometers used to take measurements using the method according to the invention are placed in pairs on each selected element or structural system, i.e. on at least one element/structural system or on two or more components/structural systems or on all components/structural systems - depending on the needs resulting from the complexity of the structure in question. In the method according to the invention, the inclinometer location on each element/structural system is symmetrical with respect to the transverse symmetry axis of that element/structural system. Measurements with the inclinometers attached to the element/structural system should be made synchronously, i.e. made at the same time at both measuring points. Measurement results are then processed to obtain further values, which allow the variable load of the roof structure to be evaluated.

Fig. 2 shows an example of symmetric attachment of two inclinometers on the structural system: the first $Incl\_1$ and the second $Incl\_2$ at the same distance $d$ from the transverse symmetry axis 6 of this structural system. The upper part of the drawing shows with the arrows the variable load of the roof, such as due to snow, occurring on segment $L1$. Arrows 7 and 8 pointing downwards show the rotation of the cross-sections of the structural system under the variable load in the attachment region of $Incl\_1$ and $Incl\_2$ inclinometers. Rotations in the indicated two places (first and second) have opposite directions, that is, as shown in Fig. 2 - the first angle $\alpha_1$ is lower than zero (clockwise rotation) and the second angle $\alpha_2$ is higher than zero (counterclockwise rotation). Attachment points of the inclinometers $Incl\_1$ and $Incl\_2$ depend on the type of structure, type of element / structural system and its size, as indicated with $L$ (post spacing) in Fig. 2. It is preferable that the inclinometers be fixed at points where the absolute values of the rotation angles $\alpha_1$ and $\alpha_2$ of the cross-sections caused by the variable load are as large as possible, for example, near to the maximum values. Such desired position of the inclinometers can be deduced from the design data for a given structure.

Table 1 summarises the results of the calculation for the frame structural system shown in Fig. 2 with illustratively defined parameters, for the load that varies from the one uniformly distributed over the entire width of the roof ($L1 = L$, case 1 in Table 1) to the one located only on one half ($L1 = L/2$, case 10 in Table 1).

Table 1: Rotation angles, bending moments and load measurement errors for the frame shown in Fig. 2 (for L = 29.5 m and d = 11.25 m) for various load patterns - from the load uniformly distributed across entire width of the roof to the load located only on one (right) half.

| No. | $a = L_1/L$ | $\alpha_1$ [°] | $\alpha_2$ [°] | $\alpha_1/\alpha_{10}$ | $\alpha_{madd} = |\alpha_2|+|\alpha_1|$ [°] | $\alpha_{madd}/\alpha_{madd0}$ | $M_{max}$ [kNm] | $M_{max}/M_{max0}$ | $\delta1**$ [%] | $\delta2***$ [%] |
|---|---|---|---|---|---|---|---|---|---|---|
| a | b | c | d | e | f | g | h | i | j | k |
| 1 | 1.00 | -0.277= $\alpha_{10}$ | 0.277 | **1.000** | 0.554 = $\alpha_{madd0}$ | **1.000** | 482 = $M_{max0}$ | **1.000** | 0.0 | 0.0 |
| 2 | 0.95 | -0.273 | 0.279 | **0.985** | 0.552 | **0.996** | 478 | **0.991** | 0.6 | 0.5 |
| 3 | 0.87 | -0.252 | 0.285 | **0.910** | 0.537 | **0.971** | 462 | **0.959** | 5.4 | 1.3 |
| 4 | 0.80 | -0.217 | 0.292 | **0.783** | 0.509 | **0.921** | 436 | **0.911** | 9.8 | 1.1 |
| 5 | 0.74 | -0.172 | 0.297 | **0.621** | 0.469 | **0.848** | 402 | **0.834** | 34.0 | 1.7 |
| 6 | 0.67 | -0.124 | 0.295 | **0.447** | 0.419 | **0.758** | 361 | **0.749** | 67.5 | 1.2 |
| 7 | 0.63 | -0.101 | 0.291 | **0.365** | 0.392 | **0.708** | 338 | **0.701** | 92.0 | 1.0 |
| 8 | 0.60 | -0.079 | 0.285 | **0.325** | 0.364 | **0.657** | 315 | **0.657** | 125 | 0.0 |
| 9 | 0.57 | -0.059 | 0.276 | **0.213** | 0.335 | **0.603** | 290 | **0.602** | 182 | 0.2 |
| 10 | 0.50 | -0.026 | 0.253 | **0.094** | 0.279 | **0.505** | 242 | **0.502** | 434 | 0.6 |
| 11* | 0.25+0.5 | -0.151 | 0.264 | **0.545** | 0.415 | **0.749** | 361 | **0.749** | 37.4 | 0.0 |

* 100% uniformly distributed load on the right half of the roof and 50% uniformly distributed load across the left half of the roof.

** $\delta1 = [(\alpha_1/\alpha_{10} - M_{max}/M_{max0})/(\alpha_1/\alpha_{10})]*100\%$

*** $\delta2 = [(\alpha_{madd}/\alpha_{madd0} - M_{max}/M_{max0})/(\alpha_{madd}/\alpha_{madd0})]*100\%$

The reference value, which accurately determines the load on the discussed frame, is a maximum value of bending moment $M_{max}$ (column $h$ of Table 1) at the corners of the frame.

Analysis of the calculation results presented in Table 1 shows that the values of rotation angles $\alpha_1$ (column c of Table 1) or $\alpha_2$ (column $d$ of Table 1) behave completely differently for unsymmetrical load (cases 1÷11 of Table 1) than the bending moment $M$ (column $i$ of Table 1). Treating them separately as measures of load could result, for an uneven load, in big errors (column $j$ of Table 1 for angle $\alpha_1$), both underestimating the load value (angle $\alpha_1$) and over-estimating it (angle $\alpha_2$). Such load measurement method is used to monitor the building structure according to the state of the art, i.e. according to the patent specification No. FI118701B.

The situation is quite different when using the sum of the absolute values of the rotation angles of two cross-sections as a frame load indicator. The ratio of the sum of the absolute values of the measured rotation angles $\alpha_1$ and $\alpha_2$ of the cross-sections to the maximum value of the bending moment $M_{max}$ is constant, with an error below 2% for the presented frame, for changes in load uniformity greater than that found in practice - from the load uniformly distributed over the entire width of the roof up to the one located only on one half (column k of Table 1). This error increases only slightly as the inclinometer is located closer to the frame's symmetry axis, for example to maximum 9% after decreasing the distance $d$ to 7.75 m from 11.25 m for the data shown in Table 1.

Thus, in this type of structural systems, the sum of the absolute values of the rotation angles of the cross-sections at two points of the structural system, symmetrically arranged with respect to its transverse symmetry axis, sufficiently precise in practice, maps the level of load/the tension of the structure in a practical range of load changes, so it can be used successfully as a load measure in roof load monitoring systems. Similar error values are also obtained as a result of calculations for other types of transverse systems, such as beams or trusses.

In practice, the monitored element or structural system may rotate as a whole, e.g. due to unbalanced settlement of the structure, distorting the inclinometric measurement of rotation angles of the cross-sections resulting from the variable load. In such cases, the inclinometers will measure the sum of rotation angles derived from the variable load $\alpha$ - $\alpha_1$ and $\alpha_2$, respectively and the rotation angle of the whole structural system or the component $\beta$- $\beta_1$ and $\beta_2$, respectively. The calculated sum of the absolute values of the rotation angles measured by the inclinometers in such cases will not reflect the mean value of the variable load of the said element or structural system. By applying an appropriate orientation of the inclinometer's sensitivity axis 4, e.g. as shown in Fig. 2, and calculating the sum of the absolute values as a module of difference of the rotation angles, measured by the inclinometers, the effect of the rotation of the structural system as a whole is eliminated (Fig. 3).

## Claims

1. A method for monitoring variable load, in particular snow load, of a roof structure, comprising measuring deflections of selected elements (5) and/or structural systems (5) by means of inclinometers (Incl_1, Incl_2), wherein:

    - for at least one selected element (5) or structural system (5), representative of the load carrying capacity exhaustion of the roof structure under variable load, at its two points, a first one and a second one, the rotation angles $\alpha_1$ and $\alpha_2$ of its cross-sections caused by the variable load are measured with two inclinometers (Incl_1, Incl_2), a first one (*Incl_1*) and a second one (*Incl_2*), which are attached to said element/system (5) at the said two points, **characterised in that** the two inclinometers are attached to said element/system (5) symmetrically with respect to its transverse symmetry axis (6), and then
    - the sum $\alpha_{madd}$ of the absolute values of rotation angles $\alpha_2$ and $\alpha_1$ is calculated according to the formula $\alpha_{madd} = |\alpha_2| + |\alpha_1|$, reflecting the mean value of the variable load of the element/system (5).

2. The method according to claim 1, **characterised in that** the inclinometer measurements are performed periodically.

3. The method according to claim 1 or 2, **characterised in that** the inclinometer measurements are performed synchronously.

## Patentansprüche

1. Verfahren zum Überwachen variabler Lasten, insbesondere Schneelasten, einer Dachkonstruktion, umfassend das Messen von Durchbiegungen ausgewählter Elemente (5) und/oder Tragwerkssysteme (5) mittels Inklinometern (Incl_1, Incl_2), wobei:

    - für mindestens ein ausgewähltes Element (5) oder Tragwerkssystem (5), das für die Tragfähigkeitsausnutzung der Dachkonstruktion unter variabler Belastung repräsentativ ist, an ihren beiden Punkten, einem ersten und einem zweiten, die durch die variable Belastung verursachten Drehwinkel $\alpha_1$ und $\alpha_2$ ihrer Querschnitte mit zwei Neigungssensoren (Incl_1, Incl_2), einem ersten *(Inel_1)* und einem zweiten *(Incl_2)*, die an den beiden Punkten an dem Element/System (5) befestigt sind gemessen werden, **gekennzeichnet dadurch, dass** die beiden Inklinometer symmetrisch in Bezug auf ihre Quersymmetrieachse (6) an dem Element/System (5) befestigt sind, und dann
    - die Summe $\alpha_{madd}$ der Absolutwerte der Drehwinkel $\alpha_2$ **und** $\alpha_1$ nach der Formel $\alpha_{madd} = |\alpha_2| + |\alpha_1|$ berechnet wird, die den Mittelwert der variablen Belastung des Elements/Systems (5) widerspiegelt.

2. Verfahren nach Anspruch 1, **dadurch gekennzeichnet, dass** die Inklinometermessungen periodisch durchgeführt werden.

3. Verfahren nach Anspruch 1 oder 2, **dadurch gekennzeichnet, dass** die Inklinometermessungen synchron durchgeführt werden.

## Revendications

1. Une méthode de surveillance de charge variable, en particulier de charge de neige, d'une structure de toit, comprenant la mesure des déviations d'éléments sélectionnés (5) et/ou de systèmes structurels (5) au moyen d'inclinomètres (Incl_1, Incl_2), dans laquelle:

    - pour au moins un élément sélectionné (5) ou un système structural (5), représentatif de l'épuisement de la capacité de charge de la structure de toit sous charge variable, à ses deux points, un premier et un second, les angles de rotation $\alpha_1$ et $\alpha_2$ de ses sections transversales provoqués par la charge variable sont mesurés avec deux inclinomètres (Incl_1, Incl_2), un premier (*Incl_1*) et un second (*Incl_2*), qui sont attachés audit élément / système (5) au niveau desdits deux points, **caractérisée en ce que** les deux inclinomètres sont attachés de manière symétrique audit élément / système (5) par rapport à son axe de symétrie transversal (6), et puis
- la somme $\alpha_{madd}$ des valeurs absolues des angles de rotation $\alpha_2$ et $\alpha_1$ est calculée selon la formule $\alpha_{madd} = |\alpha_2| + |\alpha_1|$ reflétant la valeur moyenne de la charge variable de l'élément/système (5).

2. La méthode selon la revendication 1, **caractérisée en ce que** les mesures d'inclinomètre sont effectuées périodiquement.

3. La méthode selon la revendication 1 ou 2, **caractérisée en ce que** les mesures d'inclinomètre sont effectuées synchroniquement.

$\alpha \div w_{max}$

Fig. 1

EP 3 312 555 B1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL P381578
- PL 183116
- PL P393402
- US 20120166136 A
- FI 118701 B